# EUROPÄISCHE PATENTSCHRIFT

(11) **EP 1 562 803 B1**
(45) Veröffentlichungstag und Bekanntmachung des Hinweises auf die Patenterteilung: **03.05.2006**
(21) Anmeldenummer: 03769343.9
(22) Anmeldetag: 27.09.2003
(51) Int. Cl.: B60R 25/04

(54) **WEGROLLSICHERUNG NACH ABSTELLEN DES MOTORS SOWIE SICHERHEITSEINRICHTUNG**
ROLLING AWAY PROTECTION AFTER ENGINE SWITCH OFF AND SECURITY DEVICE
DISPOSITIF EMPECHANT LA DERIVE D'UN VEHICULE APRES L'ARRET DU MOTEUR ET DISPOSITIF DE SECURITE

(30) Priorität: 19.11.2002 DE 10253936
(43) Veröffentlichungstag der Anmeldung: 17.08.2005
(73) Patentinhaber: Bayerische Motoren Werke Aktiengesellschaft, 80809 München (DE)
(72) Erfinder: EHRMAIER, Rudolf, 81927 München (DE)
(86) Internationale Anmeldenummer: PCT/EP2003/010840
(87) Internationale Veröffentlichungsnummer: WO 2004/045926

(56) Entgegenhaltungen:
- DE-A- 10 023 063
- DE-A- 10 028 350
- DE-A- 19 815 676

## Beschreibung

Die Erfindung betrifft ein Verfahren zur Sicherung eines Kraftfahrzeugs gegen Wegrollen nach Abstellen des Motors gemäß dem Oberbegriff des Patentanspruchs 1 sowie ein entsprechendes Kraftfahrzeug mit einer Sicherheitseinrichtung gemäß dem Oberbegriff des Patentanspruchs 7.

Insbesondere beschäftigt sich die vorliegende Erfindung mit den Anforderungen, die sich aus der Key-Interlock-Vorschrift gemäß FMVSS 114 ergeben. Diese Vorschrift besagt unter anderem, daß bei Kraftfahrzeugen mit Automatikgetriebe der Zündschlüssel nur dann abziehbar sein darf, wenn sich der Wählhebel des Automatikgetriebes in der Position "P" für Parken befindet. Hierdurch soll verhindert werden, daß der Fahrer das Kraftfahrzeug verläßt, ohne das Kraftfahrzeug vorher gegen ein unbeabsichtigtes Wegrollen gesichert zu haben. Um dieser Vorschrift zu genügen, kann das Zündschloß geeignete mechanische Verriegelungsmechanismen aufweisen, die über den Zündschlüssel betätigbar sind.

In zunehmendem Maße finden jedoch Kraftfahrzeug-Zugangssysteme und - Inbetriebnahmesysteme ohne mechanisches Zündschloß Verwendung. Solche schlüssellosen mechanischen Inbetriebnahmesysteme ohne mechanisches Zündschloß umfassen einen vom Fahrzeugnutzer mitzuführenden Identifikationsgeber (ID-Geber) sowie eine Einrichtung zum Starten und Stoppen des Motors. Sobald der ID-Geber im Fahrzeuginnenraum erkannt wird, wird über einen Frage-Antwort-Dialog des ID-Gebers mit einer Sende-Empfangs-Einrichtung des Kraftfahrzeugs die Authentifizierung des ID-Gebers durchgeführt und bei positiver Authentifizierung, bei der sich also der ID-Geber als nutzungsberechtigt erweist, der Motor nach Betätigung der Einrichtung zum Starten gestartet.

Der ID-Geber, der nach Art eines Schlüssels ausgebildet sein kann, jedoch keinen Bart hat und lediglich ein "elektronischer" Schlüssel ist, wird vom Nutzer vor dem Starten des Kraftfahrzeugs ähnlich wie ein Schlüssel in eine entsprechend ausgebildete Aufnahme des Kraftfahrzeugs eingeführt. Um der oben genannten Key-Interlock-Anforderung zu genügen, sind Maßnahmen vorgeschlagen, um den in der Aufnahme befindlichen ID-Geber hierin zu verriegeln, solange nicht die Getriebestufe "P" eingelegt ist.

Die jüngsten Entwicklungen gehen jedoch dahin, daß zum Starten des Motors der ID-Geber gar nicht mehr in die Aufnahme eingeführt werden muß, vielmehr stellt die im Kraftfahrzeug befindliche Elektronik unabhängig davon, ob der ID-Geber sich in der Aufnahme befindet, das Vorhandensein des ID-Gebers innerhalb des Fahrzeugs fest und führt die erforderliche Authentifizierung durch. Die entsprechenden Neuentwicklungen sind unter "Comfort Access" bzw. "Keyless Go" bekannt.

Gattungsgemässe Kraftfahrzeuge mit eine Sicherheibeinrichtung sind z.B. aus dem DE 100 28 350 A bekannt.

Bei diesen neuen Systemen kann die Key-Interlock-Vorschrift nicht mehr durch Verriegelung des ID-Gebers verwirklicht werden, nachdem sich der ID-Geber zum Fahren des Kraftfahrzeugs nicht mehr in einer entsprechenden Aufnahme befinden muß. Andere Lösungsansätze sind nun erforderlich.

Ein Lösungsansatz besteht darin, Maßnahmen zu treffen, daß der Fahrer den Motor nicht abstellen kann, solange nicht die Getriebeposition "P" für Parken eingelegt ist. Diese Maßnahme stellt in der Tat sicher, daß der Fahrer sein Kraftfahrzeug in der Regel nicht verlassen wird, ohne es durch Einlegen der Getriebeposition "P" gegen Wegrollen gesichert zu haben. Die Key-Interlock-Vorschrift ist somit erfüllt.

Diese Lösung weist jedoch den Nachteil auf, daß ein Abstellen des Motors auch in bestimmten Gefahrensituationen oder in Situationen, die der Fahrer als Gefahrensituationen einschätzt, nicht möglich ist, beispielsweise dann, wenn während der Fahrt Probleme mit dem Motor auftreten, das Gas sich nicht zurücknehmen läßt o. dgl.

Der Erfindung liegt daher im wesentlichen die Aufgabe zugrunden, eine Lösung aufzuzeigen, wie der Key-Interlock-Vorschrift im Falle der Verwendung schlüsselloser Inbetriebnahmesysteme, bei denen sich die ID-Geber in beliebiger Stelle im Kraftfahrzeug ohne eine vorgegebene körperliche Verbindung zu anderen Kraftfahrzeugteilen befinden können, genügt werden kann und der Fahrer in Gefahrensituationen dennoch während der Fahrt den Motor abstellen kann.

Diese Aufgabe wird hinsichtlich des Verfahrens erfindungsgemäß durch die kennzeichnenden Merkmale des Patentanspruchs 1 und hinsichtlich der Sicherheitsvorrichtung durch die kennzeichnenden Merkmale des Patentanspruchs 6 gelöst. Weitere bevorzugte Ausgestaltungen der Erfindung ergeben sich aus den Unteransprüchen.

Gemäß der Erfindung ist es somit möglich, auch während der Fahrt den Motor abzustellen, sofern die Geschwindigkeit des Kraftfahrzeugs größer ist als eine gewisse Schwellengeschwindigkeit. Unterhalb der Schwellengeschwindigkeit muß das Fahrzeug zunächst zum Stehen gebracht werden und die Parkposition "P" eingelegt werden, bevor der Motor abgestellt werden kann. In aller Regel und bei ordnungsgemäßem Betrieb kann der Fahrer samt ID-Geber das Fahrzeug, dessen Motor abgestellt ist, daher nicht verlassen, ohne vorher die Parkposition eingelegt zu haben. Die Key-Interlock-Vorschrift ist somit erfüllt. Im Notfall kann er aber auch während der Fahrt die Zündung ausschalten, falls er dies für erforderlich erachtet. Falls ein solcher Notfall unterhalb der Schwellengeschwindigkeit auftritt, kann er das Fahrzeug schnell und sicher durch Bremsen zum Anhalten bringen und dann gegebenenfalls die Parkposition "P" einlegen und den Motor abschalten.

Allerdings sollte die Schwellengeschwindigkeit so hoch sein, daß ein Mißbrauch der Funktion des Ausschalten des Motors bei fahrendem Fahrzeug nicht zu befürchten ist. Die bevorzugt anzuwendende Geschwindigkeitsschwelle von etwa 15 km/h stellt einen sehr guten Kompromiß dar.

In bevorzugter Weiterbildung der Erfindung ist vorgesehen, daß ein Abstellen des Motors unabhängig von der gewählten Getriebeposition und unabhängig von der Geschwindigkeit des Fahrzeugs auch dann ermöglicht wird, wenn die bordeigene Steuerung einen Motorfehler erkennt. Diese Maßnahme ist sinnvoll und zweckmäßig und verstößt auch nicht gegen die Key-Interlock-Vorschrift.

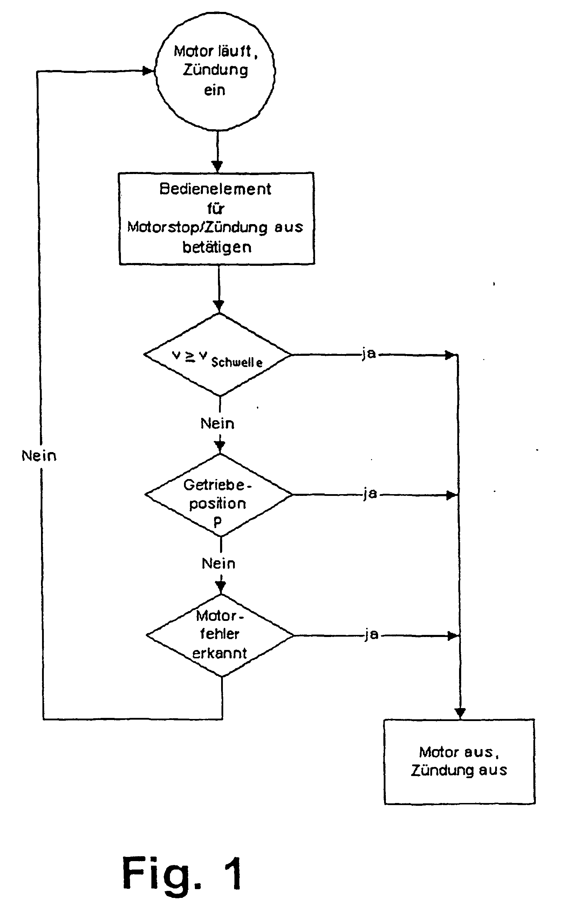

Im folgenden wird die Erfindung anhand der Zeichnung näher erläutert. Die einzige Figur 1 der Zeichnung veranschaulicht das erfindungsgemäße Verfahren anhand eines Flußdiagramms.

Ausgangssituation ist die Situation, bei der sich der Fahrer im Fahrzeug befindet, die Zündung eingeschaltet ist und der Motor läuft, vgl. 1. Der Fahrer betätigt dann das Bedienelement, mit dem der Motor angehalten bzw. die Zündung ausgeschaltet werden kann, vgl. 2.

Die bordeigene Steuerung ermittelt nunmehr die aktuelle Fahrgeschwindigkeit v des Fahrzeugs und vergleicht diese Geschwindigkeit mit der vorgegebenen Schwellengeschwindigkeit vSchwelle, vgl. 3. Falls die aktuelle Fahrgeschwindigkeit v größer oder gleich ist der vorgegebenen Schwellengeschwindigkeit vSchwelle, wird zugelassen, daß der Motor bzw. die Zündung ausgeschaltet werden, vgl. 6.

Falls die aktuelle Fahrgeschwindigkeit nicht größer ist als die Schwellengeschwindigkeit, wird bei 4 untersucht, ob die Getriebeposition "P" für Parken eingelegt ist. Falls die Getriebeposition für Parken eingelegt ist, wird das Ausschalten von Motor bzw. Zündung zugelassen.

Falls die Getriebeposition "P" für Parken nicht eingelegt ist, wird bei 5 ermittelt, ob ein Motorfehler vorliegt. Falls ein Motorfehler vorliegt, wird das Ausschalten von Motor bzw. Zündung zugelassen. Falls ein Motorfehler nicht erkannt wird, wird ein Ausschalten von Motor bzw. Zündung nicht zugelassen und Motor bzw. Zündung können erst ausgeschaltet werden, wenn der Fahrer die Getriebeposition "P" für Parken eingelegt hat.

Die erfindungsgemäße Lösung ermöglicht es auch, daß das Kraftfahrzeug in der Getriebeposition "N" für "Neutral" mit ausgeschaltetem Motor bewegt wird, was beispielsweise in der Werkstatt oder in der Waschstraße erforderlich sein kann. Hierfür ergeben sich zwei Möglichkeiten:

Im Falle der ersten Alternative ist der ID-Geber nicht in eine fahrzeugseitige Aufnahme eingesteckt, befindet sich also beispielsweise in einer Tasche des Fahrers. Der Fahrer legt die Getriebeposition "P" für Parken ein, schaltet Motor und Zündung aus, schaltet die Zündung wieder ein und legt (gegebenenfalls bei gleichzeitigem Betätigen der Bremse) die Getriebeposition "N" ein. Das Kraftfahrzeug kann nun beispielsweise von Hand geschoben werden oder die Waschstraße durchlaufen. Zum Ausschalten der Zündung muß zwangsläufig wieder die Getriebeposition "P" eingelegt werden.

Im Falle der zweiten Alternative wird der ID-Geber in die hierfür vorgesehene kraftfahrzeugseitige Aufnahme gesteckt und hierin, wie aus dem Stand der Technik bekannt, verriegelt. Als Folge hiervon können der Motor und die Zündung jederzeit und in jeder Wählhebel- bzw. Getriebeposition ausgeschaltet werden. Im Normalfall wird also in Position "D" für "Drive" der Motor abgestellt und anschließend die Position "N" eingelegt. Das Kraftfahrzeug kann nun beispielsweise von Hand verschoben werden oder eine Waschstraße durchlaufen. Im weiteren Verlauf kann der ID-Geber erst wieder abgezogen werden, wenn die Getriebeposition "P" eingelegt ist.

## Patentansprüche

1. Verfahren zur Sicherung eines Kraftfahrzeugs gegen Wegrollen nach Abstellen des Motors
- wobei das Kraftfahrzeug mit einem schlüssellosen Inbetriebnahmesystem mittels eines vom Fahrzeugnutzer mitzuführenden Identifikationsgebers und eines Betätigungselements (2) zum Starten und Abstellen eines Motors ausgerüstet ist,
- wobei das Kraftfahrzeug ein über eine Wähleinrichtung betätigtes automatisches Getriebe aufweist und über die Wähleinrichtung neben anderen Getriebepositionen auch eine Getriebeposition ("P") für Parken auswählbar ist,
- und wobei das Abstellen des Motors dann grundsätzlich nicht möglich ist, wenn nicht die Getriebeposition ("P") für Parken ausgewählt ist,
**dadurch gekennzeichnet,**
**daß** ein Abstellen des Motors auch bei nicht ausgewählter Getriebeposition ("P") für Parken zusätzlich dann ermöglicht wird, wenn die Geschwindigkeit (v) des Kraftfahrzeugs größer oder gleich ist einer vorgegebenen Schwellengeschwindigkeit (vSchwelle).

2. Verfahren nach Anspruch 1, **dadurch gekennzeichnet , daß** die Schwellengeschwindigkeit (vschwelle) größer als 3 km/h ist.

3. Verfahren nach Anspruch 2, **dadurch gekennzeichnet , daß** die Schwellengeschwindigkeit (vSchwelle) zwischen 5 km/h und 25 km/h liegt.

4. Verfahren nach Anspruch 3, **dadurch gekennzeichnet , daß** die Schwellengeschwindigkeit (vSchwelle) bei 15 km/h +/- 5 km/h liegt.

5. Verfahren nach einem der vorhergehenden Ansprüche,
**dadurch gekennzeichnet , daß** ein Abstellen des Motors unabhängig von der gewählten Getriebeposition und unabhängig von der Geschwindigkeit des Kraftfahrzeugs auch dann ermöglicht wird, wenn die bordeigene Steuerung einen Motorfehler erkennt.

6. Verfahren nach einem der vorhergehenden Ansprüche,
**dadurch gekennzeichnet , daß** auch das Ausschalten der Zündung dann grundsätzlich nicht möglich ist, wenn nicht die Getriebeposition ("P") für Parken ausgewählt ist.

7. Kraftfahrzeug mit einer Sicherheitseinrichtung gegen Wegrollen nach Abstellen des Motors,
- wobei das Kraftfahrzeug mit einem schlüssellosen Inbetriebnahmesystem mittels eines vom Fahrzeugnutzer mitzuführenden Identifikationsgebers und eines Betätigungselements (2) zum Starten und Abstellen eines Motors ausgerüstet ist,
- wobei das Kraftfahrzeug ein über eine Wähleinrichtung betätigtes automatisches Getriebe aufweist und über die Wähleinrichtung neben anderen Getriebepositionen auch eine Getriebeposition ("P") für Parken auswählbar ist,
- und wobei das Abstellen des Motors dann grundsätzlich nicht möglich ist, wenn nicht die Getriebeposition ("P") für Parken ausgewählt ist,
**gekennzeichnet durch** eine das Abstellen des Motors ermöglichende erste Freigabeeinrichtung, die für Geschwindigkeiten des Kraftfahrzeugs größer als eine vorgegebene Schwellengeschwindigkeit (vSchwelle) zur Freigabe aktiviert ist.

8. Kraftfahrzeug mit einer Sicherheitseinrichtung nach Anspruch 7, **dadurch gekennzeichnet , daß** die Schwellengeschwindigkeit größer als 3 km/h ist, vorzugsweise zwischen 5 km/h und 25 km/h liegt und insbesondere 15 km/h +/- 5 km/h beträgt.

9. Kraftfahrzeug mit einer Sicherheitseinrichtung nach Anspruch 7 oder 8, **gekennzeichnet durch** eine das Abstellen des Motors ermöglichende zweite Freigabeeinrichtung, die zur Freigabe aktiviert ist, wenn die bordeigene Steuerung einen Motorfehler erkennt.

## Revendications

1. Procédé de sécurisation d'un véhicule empêchant la dérive après l'arrêt du moteur,
- le véhicule étant équipé d'un système de mise en service sans clé moyennant un dispositif d'identification à emporter par l'utilisateur du véhicule et un élément d'actionnement (2) pour démarrer et arrêter un moteur,
- le véhicule présentant une boîte de vitesse automatique actionnée via un dispositif de sélection et une position de la boîte de vitesse pour se garer (« P ») pouvant également être sélectionnée via le dispositif de sélection parmi d'autres positions de la boîte de vitesse,
- et l'arrêt du moteur n'étant alors par principe pas possible, lorsque la position de la boîte de vitesse (« P ») pour se garer n'est pas sélectionnée,
**caractérisé en ce qu'**
un arrêt du moteur est rendu possible en plus même si la position de la boîte de vitesse (« P ») pour se garer n'est pas sélectionnée, lorsque la vitesse (v) du véhicule est supérieure ou égale à un seuil de vitesse (vseuil) prédéterminé.

2. Procédé selon la revendication 1,
**caractérisé en ce que**
le seuil de vitesse (vseuil) est supérieur à 3 km/h.

3. Procédé selon la revendication 2,
**caractérisé en ce que**
le seuil de vitesse (vseuil) se situe entre 5 km/ h et 25 km/h.

4. Procédé selon la revendication 3,
**caractérisé en ce que**
le seuil de vitesse (vseuil) se situe autour de 15 km/h +/- 5 km/h.

5. Procédé selon l'une quelconque des revendications précédentes,
**caractérisé en ce qu'**
un arrêt du moteur est rendu possible indépendamment de la position de la boîte de vitesse sélectionnée et indépendamment de la vitesse du véhicule, même si la commande à bord détecte une erreur moteur.

6. Procédé selon l'une quelconque des revendications précédentes,
**caractérisé en ce que**
l'arrêt de l'allumage n'est, par principe, pas possible non plus, même lorsque la position de la boîte de vitesse (« P ») pour se garer est sélectionnée.

7. Véhicule comprenant un dispositif de sécurité empêchant la dérive après l'arrêt du moteur,
- le véhicule étant équipé d'un système de mise en service sans clé moyennant un dispositif d'identification à emporter par l'utilisateur du véhicule et un élément d'actionnement (2) pour démarrer et arrêter un moteur,
- le véhicule présentant une boîte de vitesse automatique actionnée via un dispositif de sélection et une position de la boîte de vitesse pour se garer (« P ») pouvant également être sélectionnée via le dispositif de sélection parmi d'autres positions de la boîte de vitesse,
- et l'arrêt du moteur n'étant alors par principe pas possible, lorsque la position de la boîte de vitesse (« P ») pour se garer n'est pas sélectionnée,
**caractérisé par**
un premier dispositif de déblocage permettant l'arrêt du moteur qui est activé pour le déblocage pour des vitesses du véhicule supérieures à un seuil de vitesse (vseuil) défini.

8. Véhicule comprenant un dispositif de sécurité selon la revendication 7,
**caractérisé en ce que**
le seuil de vitesse est supérieur à 3 km/h, se situe de préférence entre 5 km/h et 25 km/h et est notamment de 15 km/h +/- 5 km/h.

9. Véhicule comprenant un dispositif de sécurité selon les revendications 7 ou 8,
**caractérisé en ce qu'**
un deuxième dispositif de déblocage permettant l'arrêt du moteur est activé lorsque la commande à bord détecte une erreur moteur.

## Claims

1. A method of preventing a vehicle from moving away after the engine has been switched off,
- wherein the vehicle is equipped with a keyless starting-up system via an identification indicator carried by the driver and an actuating element (2) for starting and switching off the engine,
- wherein the vehicle has an automatic gear unit actuated by a selecting device adapted to select a parking gear (P) in addition to other gears, and
- wherein the engine cannot in principle be switched off unless the parking gear (P) has been engaged,
**characterised in that**
even when the parking gear (P) has not been selected, the engine can also be switched off if the speed (v) of the vehicle is less than or equal to a set threshold speed (vThreshold).

2. A method according to claim 1, **characterised in that** the threshold speed (vThreshold) is greater than 3 km/h.

3. A method according to claim 2, **characterised in that** the threshold speed (vThreshold) is between 5 and 25 km/h.

4. A method according to claim 3, **characterised in that** the threshold speed (vThreshold) is in the range of 15 +/- 5 km/h.

5. A method according to any of the preceding claims, **characterised in that** irrespective of the selected gear and irrespective of the speed of the vehicle the engine can also be switched off if the on-board control system detects a fault in the engine.

6. A method according to any of the preceding claims, **characterised in that** it is also in principle impossible to switch off the ignition unless the parking gear (P) has been selected.

7. A vehicle with a security device preventing movement after the engine has been switched off,
- wherein the vehicle is equipped with a keyless starting-up system via an identification indicator carried by the driver and an actuating element (2) for starting and switching off the engine,
- wherein the vehicle has an automatic gear unit actuated by a selecting device adapted to select a parking gear (P) in addition to other gears, and
- wherein the engine cannot in principle be switched off unless the parking gear (P) has been engaged,
**characterised by** a first release device enabling the engine to be switched off, the release being activated at vehicle speeds greater than a set threshold speed (vThreshold).

8. A vehicle with a security device according to claim 7, **characterised in that** the threshold speed is greater than 3 km/h, preferably between 5 and 25 km/h and particularly 15 +/- 5 kmlh.

9. A vehicle with a security device according to claim 7 or 8, **characterised by** a second release device enabling the engine to be switched off, the release being activated if the on-board control system detects a fault in the engine.
